# EUROPÄISCHE PATENTSCHRIFT

(11) **EP 1 977 134 B1**
(45) Veröffentlichungstag und Bekanntmachung des Hinweises auf die Patenterteilung: **30.12.2009**
(21) Anmeldenummer: 07702662.3
(22) Anmeldetag: 10.01.2007
(51) Int. Cl.: F16D 65/21

(54) **SELBSTVERSTÄRKENDE SCHEIBENBREMSE MIT ELEKTROMECHANISCHEM AKTUATOR**
SELF-ENERGIZING DISK BRAKE WITH AN ELECTROMECHANICAL ACTUATOR
FREIN À DISQUE À AUTO-RENFORCEMENT AVEC ACTIONNEUR ÉLECTROMÉCANIQUE

(30) Priorität: 12.01.2006 DE 102006001550; 29.01.2006 DE 102006029942
(43) Veröffentlichungstag der Anmeldung: 08.10.2008
(73) Patentinhaber: KNORR-BREMSE Systeme für Nutzfahrzeuge GmbH, 80809 München (DE)
(72) Erfinder: BAUMGARTNER, Johann, 85368 Moosburg (DE); TRIMPE, Robert, 82234 Wessling (DE); GRUBER, Robert, 53539 Pfaffing (DE); GEISSLER, Steffen, 85399 Hallbergmoos (DE); PERICEVIC, Aleksandar, 80636 München (DE); SEIDENSCHWANG, Matthias, 80367 München (DE)
(74) Vertreter: Mattusch, Gundula
(86) Internationale Anmeldenummer: PCT/EP2007/000160
(87) Internationale Veröffentlichungsnummer: WO 2007/082658

(56) Entgegenhaltungen:
- EP-A2- 0 894 685
- DE-A1- 10 347 942
- DE-A1-102005 030 618
- US-A1- 2004 262 098
- US-A1- 2005 067 233

## Beschreibung

Die Erfindung betrifft eine Scheibenbremse mit einem als Elektromotor ausgelegten elektromechanischen Aktuator zur Betätigung einer Zuspannvorrichtung zum Zuspannen der Bremse, die eine Selbstverstärkungseinrichtung aufweist.

Scheibenbremsen dieser Art sind an sich bekannt. Sie haben sich bisher in der Praxis nicht durchsetzen können, da keine konstruktiv und wirtschaftlich überzeugenden Konzepte sondern eher nur Konzeptstudien vorgestellt wurden.

Als Selbstverstärkungseinrichtung eignet sich beispielsweise eine Rampen- oder Keilfläche, an welcher sich der nicht rein senkrecht zur Bremsscheibe sondern auch in Drehrichtung bzw. parallel zur Bremsscheibe bewegte Bremsbelag abstützt.

Die Zuspannvorrichtung kann z.B. ein Planetengetriebe umfassen, welches von einem Elektromotor als Aktuator angetrieben wird. Dieses Planetengetriebe betätigt bei einer Betriebsbremsung ein die Betätigungskraft umlenkendes Element (z.B. eine Exzenter-welle), welche den Bremsbelag zur Nutzung der Selbstverstärkung mittels einer Druckplatte in Umfangsrichtung der Bremsscheibe verschiebt. Bei einer Parkbremsung treibt das Planetengetriebe über ein äußeres Zahnrad zwei parallel angeordnete, selbsthemmende Gewindespindeln an. Diese setzen die eingeleitete Rotationsbewegung in eine Linearbewegung der Spindelmuttern um und drücken somit den Bremsbelag an die Bremsscheibe.

DE 102005030618 offenbart als nächstliegende Stand der Technik eine Scheibenbremse in selbst verstärkende Bavart mit einer Zuspanneinheit Das Planetengetriebe dieser Anordnung erfährt bei Bremsungen sehr hohe Drehmomente. Durch diese Belastung und den relativ geringen, zur Verfügung stehenden Bauraum in der Radbremse ist es notwendig, ein relativ hochwertiges Planetengetriebe oder sonstiges Zahnradgetriebe einzusetzen.

Vor diesem Hintergrund ist es die Aufgabe der Erfindung, ein alternatives Konzept zur Realisierung einer selbstverstärkenden Scheibenbremse anzugeben, das kostengünstig realisierbar ist. Zusätzlich ist ein guter Wirkungsgrad erwünscht, da dieser direkt die erforderliche Antriebsleistung des Elektromotors beeinflusst.

Die Erfindung löst diese Aufgabe durch den Gegenstand des Anspruchs 1.

Vorteilhafte Ausgestaltungen sind den übrigen Unteransprüchen zu entnehmen.

Die Erfindung schafft eine Scheibenbremse mit einem als Elektromotor ausgelegten elektromechanischem Aktuator zur Betätigung einer Zuspannvorrichtung zum Zuspannen der Bremse, die eine Selbstverstärkungseinrichtung aufweist, wobei der Elektromotor direkt oder über ein Getriebe auf einen Drehhebel einwirkt, der auf wenigstens einen Bremskolben einwirkt, der einen Bremsbelag parallel zur Bremsscheibendrehachse verschiebt, welcher sowohl in Richtung parallel zur Bremsscheibendrehachse als auch parallel zur Bremsscheibenreibfläche beweglich ist.

Dieses Konzept kann kostengünstig insbesondere ohne teure hochpräzise Teile umgesetzt werden und bietet die Möglichkeit zur Realisierung eines guten Wirkungsgrades.

Die Erfindung ermöglicht es, eine besonders zuverlässig und einfach bauende selbstverstärkende Scheibenbremse mit elektromechanischer Betätigung zu realisieren, bei deren Realisierung in vorteilhafter Weise auch aus dem Bereich pneumatischer Scheibenbremsen für Nutzfahrzeuge bekannte Komponenten wie Drehhebel und deren Lagerungen nutzbar sind, wobei eine Zustellung parallel zur Bremsscheibendrehachse dazu genutzt wird, die Bremsbeläge zuzuspannen, obwohl diese bei der Bremsung ja gerade auch eine Bewegung in Umfangsrichtung ausführen müssen.

Ein besonderer Vorteil der Zuspannung senkrecht zur Bremsscheibe ist auch darin zu sehen, dass die Steuerung der Bremse die Bewegungsrichtung des Fahrzeugs nicht kennen muß, wenn zugespannt wird.

Vorzugsweise weist der Elektromotor in kompakter Bauart ein Lineargetriebe auf, welches auf den Drehhebel einwirkt. Dieses kann als Kugelumlauftrieb ausgelegt sein.

Um die Beweglichkeit des Bremsbelages parallel zur Bremsscheibenreibfläche zu gewährleisten, ist es zweckmäßig, wenn zwischen dem Bremsbelag und dem Bremskolben ein Lager angeordnet ist, das die Bewegung des Bremsbelages senkrecht zur Zustellbewegung des Drehhebel, d.h. parallel zur Bremsscheibenreibfläche realisiert bzw. erlaubt.

Es ist ferner zweckmäßig, wenn der Bremskolben parallel zu wenigstens einem oder mehreren Verstärkungskolben angeordnet ist, die sich mit einem ihrer Enden direkt oder über ein Lager am Bremssattel abstützen und an ihrem anderen Ende wenigstens als Selbstverstärkungseinrichtung wenigstens eine Rampenfläche aufweisen, die geneigt zur Bremsscheibenreibfläche ausgerichtet ist. Besonders raumsparend ist dabei eine Anordnung des Bremskolbens zwischen zwei der Verstärkungskolben.

Vorzugsweise weisen die Verstärkungskolben doppelsinnige Rampenflächen auf, so dass sie in Vorwärts- und Rückwärtsfahrt bei Bremsungen als Rampenflächen zur Selbstverstärkung wirken.

Es ist dabei zweckmäßig, zwischen den Verstärkungskolben und dem Bremsbelag Wälzkörper anzuordnen. Die Rampen sind vorzugsweise im Verstärkungskolben ausgebildet und im Belag ist korrespondierend eine Ausnehmung ausgebildet, die den Wälzkörper weitgehend formschlüssig kalottenartig umgreift und in die ein Lager wie ein Gleitlager eingesetzt ist, so dass die Wälzkörper auf den Rampen rollen können. Eine umgekehrte Anordnung mit Rampen in der Belagträgerplatte und einer nahezu formschlüssigen, z.B. kalottenartigen Ausnehmung in den Verstärkungskolben oder einer zusätzlichen Druckplatte oder auch eine Ausgestaltung mit Rampen in beiden Elementen sind auch denkbar, aber weniger bevorzugt.

Es bietet es sich als zweckmäßig an, zwischen den Rampenflächen der Verstärkungskolben und dem Bremsbelag Wälzkörper anzuordnen.

Der Elektromotor wird ferner vorzugsweise mit einer Regelungsvorrichtung zur Regelung des Bremsvorganges verbunden, um die Selbstverstärkungswirkung in Abhängigkeit von den bei der Bremsung bestehenden Parametern zu regeln. Dabei können Sensoren und/oder rechnerische Methoden zur Regelung herangezogen werden.

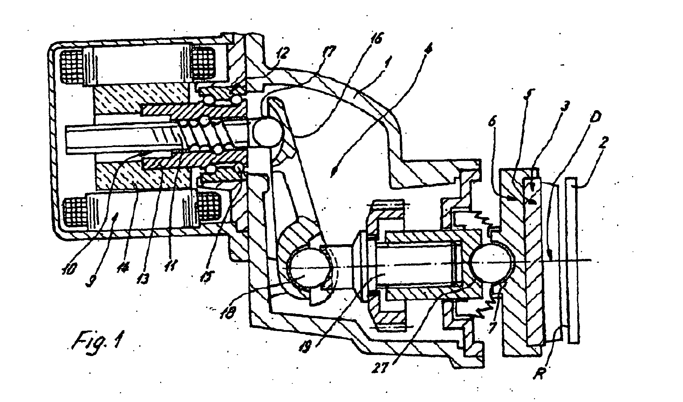

Fig. 1 zeigt eine weiter unten näher erläuterte Ausführung mit einem konstanten Rampenwinkel α zwischen den Rampen und der Bremsscheibenreibfläche. Konstante Rampenwinkel, insbesondere degressiv verlaufende; sind möglich.

Damit wird ein besonders einfacher konstruktiver Aufbau erreicht, der sich durch einen robusten Aufbau, eine gute Funktionssicherheit und niedrige Herstellkosten auszeichnet. Dabei bieten sich Kugeln als kostengünstige Rollkörper an, die sich quasi selbst in der Rampenfläche ausrichten. Zur Erhöhung der Tragfähigkeit können die Kugeln auch in angepassten Laufrillen ablaufen.

Eine Variante mit Rollen als Rollkörpern würde dagegen eine besonders geringe Hysterese aufweisen (hier nicht dargestellt).

Es ist auch eine Variante denkbar, bei welche der Rampenwinkel der Ausnehmungen in Umfangsrichtung um die Längsachse der Nachstellmuttern bzw. Bremskolben nicht konstant ist sondern veränderlich, so dass je nach Drehstellung der Muttern ein verschieden steiler Rampenwinkel α vorliegt. Hierzu können für die verschiedenen Drehstellungen Kugellaufrillen mit unterschiedlicher Steigung angeordnet sein.

Damit kann die Zuspanncharakteristik auf einfache Weise verändert werden, indem die Muttern verdreht werden, beispielsweise über einen separaten Verstellaktuator, vorzugsweise elektromechanischer Bauart (z.B. ein weiterer, kleinerer Elektromotor), der über eine Abtriebswelle mit Zahnrad die Mutter(n) verdreht, beispielsweise, indem er mit dem Abtriebsrad eine der Muttern z.B. an einer Außenverzahnung ihres Flansches antreibt und die andere Mutter über einen Riementrieb mitgenommen wird, der beide Muttern umschlingt.

Derart kann auch im Grenzbereich des Reibwertes erzielbare Selbstverstärkungsgrad erhöht werden. Das Umschalten kann allerdings nur im gelösten Zustand erfolgend, da sich die Muttern während der Zuspannungen der Bremse nicht verdrehen können.

Die Rampen können auch einen Bogen beschreiben, so dass der Belag der Geometrie des Bremsringes bzw. der Ringgeometrie der Bremsscheibe bei seiner Bewegung folgt.

Weitere vorteilhafte Ausgestaltungen sind in den übrigen Unteransprüchen angegeben.

Nachfolgend wird die Erfindung anhand von Ausführungsbeispielen unter Bezug auf die Zeichnung anhand von Ausführungsbeispielen näher beschrieben.
Fig. 1 einen Schnitt durch eine Prinzipskizze einer Scheibenbremse;
Fig.2 einen zu Fig. 1 senkrechten Schnitt durch die Scheibenbremse aus Fig. 1.

Die Bremse nach Fig. 1 baut auf einem Bremssattel 1 auf, der eine Bremsscheibe 2 im oberen Umfangsbereich umfasst, wobei hier nur der zuspannseitige Bereich dargestellt ist. Das Umgreifen der Bremsscheibe 2 im oberen Umfangsbereich kann in an sich bekannter Art und Weise erfolgen.

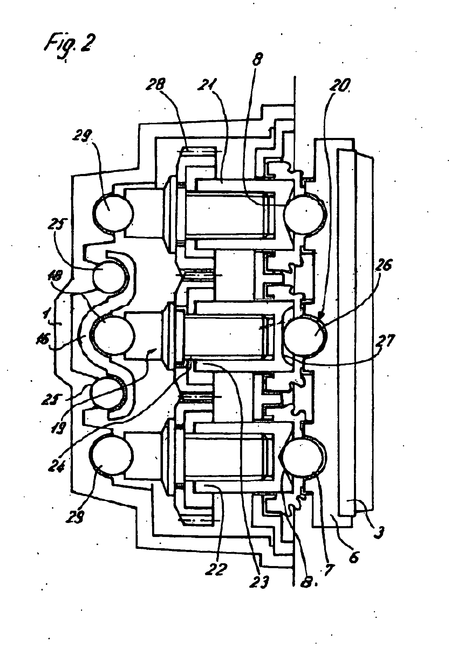

Zum Zuspannen der Bremse wird mittels einer Zuspannvorrichtung 4 ein erster zuspannseitiger Bremsbelag 3 parallel zur Bremsscheibenachse auf die Bremsscheibe hin bewegt, der sich mit seiner Druckplatte 5, die in eine weitere Trägerplatte beingesetzt ist in Umfangsrichtung der Bremsscheibe 2 über Wälzkörper 7 an einer Keil- oder Rampenfläche 8 (Fig. 2) abstützt, die schräg zur Bremsscheibenreibfläche ausgerichtet ist, so dass er sich zusätzlich in Richtung der Bremsscheibe 2 verschieb, sobald Belag an der Bremsscheiben-Reibfläche angepreßt und durch diese in Umfangsrichtung verschoben wird..

Die Anlage am weiteren Bremsbelag auf der Reaktionsseite wird z.B. durch eine zumindest im äußeren Umfangsbereich realisierte axiale Beweglichkeit der Bremsscheibe 2 und/oder durch eine bewegliche Anordnung des Bremssattels 1 z.B. an einem Bremsträger (hier nicht dargestellt) realisiert, so dass die erfindungsgemäße Bremse gleichermaßen für Schiebe-, Schwenk- und Festsattelkonzepte geeignet ist (hier nicht dargestellt).

Der Zuspannvorrichtung 4 ist ein innerhalb oder vorzugsweise außerhalb des Bremssattels 1 angeordneter Elektromotor 9 als Aktuator zugeordnet, der ein Lineargetriebe 10 zum Umsetzen seiner Drehbewegungen in eine Linearbewegung eines Druckelementes 11 aufweist. Bei diesem Druckelement handelt es sich hier um die Spindel eines Kugelumlauftriebes 12. Andere Konzepte sind denkbar. Vorteilhaft ist eine lineare oder im wesentlichen lineare Abtriebsbewegung des Elektromotors.

Hier ist die Mutter 13 der Kugelumlaufspindel mit dem Rotor 14 des Elektromotors fest verbunden und gemeinsam mit diesem Rotor in einer Kugellageranordnung 15 gelagert.

Diese Antriebseinheit ist, vergleichbar zu einem Betätigungszylinder einer druckluftbetätigten Scheibenbremse direkt an die Bremse bzw. an deren Bremssattel 1 angeflanscht.

Die Spindel 11 wirkt z.B. über eine Kugel 17 auf ein erstes Ende eines Drehhebels 16 ein, der mit seinem weiteren Ende über eine Lageranordnung 25 im Bremssattel 1 gelagert ist.

Das weitere Ende des exzentrisch gelagerten Dreh- bzw. Bremshebels wirkt z.B. über eine Kugel 18 oder einen geeigneten Ansatz auf einen Betätigungskolben 19 ein, der zum Zwecke von Verschleißnachstellung selbst axial längenveränderlich ist, indem er z.B. aus einer Mutter 23 und einer Spindel 24 besteht.

Der Betätigungskolben 19 überträgt die Bewegung des Drehhebels 16 in eine Zustellbewegung des Bremsbelages 3 parallel zur Bremsscheibendrehachse.

Zwischen dem Bremsbelag 3 und dem Drehhebel 16 ist ein Rollen- oder Gleitlager 20 ausgebildet, das hier aus einer Rolle 26 besteht, die in einer Ausnehmung 27 des Betätigungskolbens beweglich ist und in der Trägerplatte 6 in einer Gleitlagerschale gehalten ist (hier nicht zu erkennen). Das Lager 20 ist dazu ausgelegt, Bewegungen des Bremsbelages bzw. der Bremsbelageinheit 3, 6 parallel zur Bremsscheibenreibfläche R zu erlauben, also im wesentlichen senkrecht zur Bremsscheibendrehachse (die parallel zur Linie D liegt).

Der Betätigungskolben 19 ist hier mittig zwischen zwei Verstärkungskolben 21, 22 angeordnet, die an ihren zur Bremsscheibe gewandten Ende die doppelsinnig ausgebildeten Keil- oder Rampenflächen 8 z.B. als Laufbahnen für die Wälzkörper 7 aufweisen und als Rampenflächen dienen, an denen sich der Bremsbelag 3 bzw. die Einheit aus den Elemente 3 und 4 in Umfangsrichtung bei Bremsungen bei Vorwärts- oder Rückwärtsfahrten abstützt.

Diese Verstärkungskolben 21, 22 sind vorzugsweise wiederum axial längenveränderlich, um Belagverschleiß auszugleichen. Sie können mit ihren vom Bremsbelag abgewandten Enden drehbar im Bremssattel gelagert sein (Lager 29).

Bei einer Bremsbetätigung wird der Betätigungskolben 19 über den elektromechanischen Antrieb und den Drehhebel 16 in Richtung der Bremsscheibe 2 verschoben, bis das Lüftspielüberwunden ist und der Bremsbelag 3 gegen die rotierende Bremsscheibe 2 gedrückt ist.

Infolge der zwischen der Bremsscheibe 2 und dem Bremsbelag 3 entstehenden Reibung wird der Bremsbelag 3 in Umfangsrichtung mitgenommen, bis die Wälzkörper 7 an den Rampenflächen 8 der Verstärkungskolben 21, 22 auflaufen, die zur Bremsscheibenachse geneigt ausgerichtet sind.

Die Verstärkungskolben 21, 22 sind zum Betätigungskolben 19 parallel geschaltet und drücken den Bremsbelag zusätzlich an die Bremsscheibe an.

Hier ist das Zuspannsystem so ausgelegt, dass nur Druckkräfte übertragen werden können. Die Rückstellbewegung kann wie bei druckluftbetätigten Bremsen durch Rückstellfedern erfolgen.

Vorteilhaft ist aber auch eine Auslegung als Druck-/Zugsystem (hier nicht dargestellt), d.h. eine Kopplung der Bauelemente der Zuspanneinheit 4 derart, dass der Bremsbelag 3 aktiv zurückgestellt werden kann, um die Bremse ganz zu lösen oder aber um zumindest regelnd in den Bremsvorgang eingreifen zu können, wenn die Bremswirkung zu stark wird.

Wie zu erkennen, greifen die Spindeln 24 der Betätigungs- und der Verstärkungskolben 19, 20, 21 an einer Außenverzahnung 28 zur Realisierung einer Synchronisation ihrer Drehbewegungen ineinander. Derart wird beispielhaft eine Synchronisationseinrichtung für die axiale Längenveränderung der Kolben realisiert, was zum Belagverschleißausgleich vorteilhaft ist.

Ein separater Nachstellantrieb für die axiale Längenveränderung dieser Kolben 19, 21, 22 kann einen weiteren Motor aufweisen, der an der Außenverzahnung von einer der Spindeln angreift (hier nicht dargestellt).

Die vorgestellte Bremse ist einfach aufgebaut und dennoch kompakt und zuverlässig. Sie ermöglicht auch einen relativ hohen Selbstverstärkungsgrad, so dass sie nur einen relativ kleinen Antrieb benötigt.

Die Zuspanneinheit bzw. -rampe kann definiert durch einen Winkel α entweder als Druckrampe, Zugrampe oder Zug-Druckrampe ausgeführt sein. Insbesondere im Falle eines Zug-Druckrampe wird als Antrieb vorteilhaft ein selbsthemmendes System gewählt, d.h. eine durch einen ungewöhnlich hohen/niedrigen Reibwert resultierende hohe Kraft in Richtung der Betätigung kann nicht zu einer unkontrollierbaren Verschiebung der Rampe führen.

### Bezugszeichen

- Ansatz: 1
- Bremsscheibe: 2
- Bremsbelag: 3
- Zuspannvorrichtung: 4
- Druckplatte: 5
- Trägerplatte: 6
- Wälzkörper: 7
- Rampenfläche: 8
- Elektromotor: 9
- Lineargetriebe: 10
- Druckelement: 11
- Kugelumlauftrieb: 12
- Mutter: 13
- Rotor: 14
- Kugellageranordnung: 15
- Kugel: 17
- Drehhebel: 16
- Kugel: 18
- Betätigungskolben: 19
- Rollenlager: 20
- Druckkolben: 21, 22
- Mutter: 23
- Spindel: 24
- Lageranordnung: 25
- Rolle: 26
- Ausnehmung: 27
- Außenverzahnung: 28
- Lager: 29

## Patentansprüche

1. Scheibenbremse mit einem als Elektromotor (9) ausgelegten elektromechanischem Aktuator zur Betätigung einer Zuspannvorrichtung (4) zum Zuspannen der Bremse, die eine Selbstverstärkungseinrichtung (8) aufweist, **dadurch gekennzeichnet, dass** der Elektromotor direkt oder über ein Getriebe auf einen Drehhebel (16) einwirkt, der auf wenigstens einen Bremskolben (19) einwirkt, der einen Bremsbelag parallel zur Bremsscheibendrehachse verschiebt, welcher sowohl in Richtung parallel zur Bremsscheibendrehachse als auch parallel zur Bremsscheibenreibfläche beweglich ist.

2. Scheibenbremse nach Anspruch 1, **dadurch gekennzeichnet, dass** der Elektromotor ein Lineargetriebe antreibt, welches auf den Drehhebel (16) einwirkt.

3. Scheibenbremse nach Anspruch 1 oder 2, **dadurch gekennzeichnet, dass** zwischen dem Bremsbelag (3) und dem Bremskolben (19) ein Lager (20) angeordnet oder ausgebildet ist, welches eine Bewegung des Bremsbelages (3) senkrecht zur Zustellbewegung des Drehhebels (16), d.h. parallel zur Bremsscheibenreibfläche erlaubt.

4. Scheibenbremse nach Anspruch 3, **dadurch gekennzeichnet, dass** die Lagerung (20) als Gleit- und/oder Wälzlager ausgebildet ist.

5. Scheibenbremse nach Anspruch 3 oder 4, dass der Bremskolben (19) axial längenveränderlich ist.

6. Scheibenbremse nach Anspruch 5 , **dadurch gekennzeichnet, dass** der Bremskolben (19) parallel zu wenigstens einem oder mehreren Verstärkungskolben (21, 22) angeordnet ist, die sich mit einem ihrer Enden direkt oder über ein Lager am Bremssattel abstützen und an ihrem anderen Ende wenigstens als Selbstverstärkungseinrichtung wenigstens eine Rampenfläche (8) aufweisen, die geneigt zur Bremsscheibenreibfläche (R) ausgerichtet ist.

7. Scheibenbremse nach Ancpruch 6 **dadurch gekennzeichnet, dass** der Bremskolben (19) zwischen zwei der Verstärkungskolben (21, 22) angeordnet ist.

8. Scheibenbremse nach Anspruch 7, **dadurch gekennzeichnet, dass** die Verstärkungskolben (21, 22) doppelsinnige Rampenflächen (8) aufweisen, so dass sie in Vorwärts- und Rückwärtsfahrt bei Bremsungen als Rampenflächen zur Selbstverstärkung wirken.

9. Scheibenbremse nach Anspruch 8, **dadurch gekennzeichnet, dass** zwischen den Verstärkungskolben (21, 22) und dem Bremsbelag Wälzkörper (7) angeordnet sind.

10. Scheibenbremse nach Anspruch 9, **dadurch gekennzeichnet, dass** der Rampenwinkel der Ausnehmungen in Umfangsrichtung um die Längsachse der Nachstellmuttern bzw. Bremskolben nicht konstant ist sondern veränderlich, so dass je nach Drehstellung der Muttern ein verschieden steiler Rampenwinkel α vorliegt.

11. Scheibenbremse nach Anspruch 10, **dadurch gekennzeichnet, dass** für die verschiedenen Drehstellungen Kugellaufrillen mit unterschiedlicher Steigung in den Verstärkungskolben angeordnet sind.

12. Scheibenbremse nach Anspruch 11, **dadurch gekennzeichnet, dass** das Lineargetriebe (10) als Kugelumlauftrieb (12) ausgelegt ist.

13. Scheibenbremse nach Anspruch 12, **dadurch gekennzeichnet, dass** die Antriebsmutter (13) des Kugelumlauftriebes (10) mit dem Rotor (14) des Elektromotors (9) verbunden ist.

14. Scheibenbremse nach Anspruch 13, **dadurch gekennzeichnet, dass** die Verstärkungskolben (21, 22) axial längenveränderlich ausgebildet sind.

15. Scheibenbremse nach Anspruch 14, **dadurch gekennzeichnet, dass** der Betätigungskolben (19) und die Verstärkungskolben (21, 22) jeweils aus einer Mutter (23) und einer in diese eingeschraubten Spindel (24) bestehen.

16. Scheibenbremse nach Anspruch 15, **dadurch gekennzeichnet, dass** die Betätigungskolben (19) und die Verstärkungskolben (21, 22) mittels einer Synchronisationseinrichtung miteinander gekoppelt sind.

17. Scheibenbremse nach einem der vorstehenden Ansprüche, **dadurch gekennzeichnet, dass** das Druckelement (11) des Spindeltriebs auf das eine Ende des Drehhebels (16) einwirkt, der mit seinem anderen Ende exzentrisch im Bremssattel (1) gelagert ist.

18. Scheibenbremse nach einem der vorstehenden Ansprüche, **dadurch gekennzeichnet, dass** der Elektromotor mit dem Kugelumlauftrieb (10) als Einheit an die Außenfläche des Bremssattels angeordnet ist und diesen mit seiner Abtriebsspindel (11) als Druckelement durchsetzt.

19. Scheibenbremse nach einem der vorstehenden Ansprüche, **dadurch gekennzeichnet, dass** die Zuspannvorrichtung so ausgelegt ist, dass nur Druckkräfte auf den Bremsbelag (3) übertragen werden.

20. Scheibenbremse nach einem der vorstehenden Ansprüche, **dadurch gekennzeichnet, dass** die Zuspannvorrichtung so ausgelegt ist, dass Zug- und Druckkräfte auf den Bremsbelag (3) übertragbar sind.

21. Scheibenbremse nach einem der vorstehenden Ansprüche, **dadurch gekennzeichnet, dass** der Elektromotor (9) mit einer Regelungsvorrichtung zur Regelung des Bremsvorganges verbunden ist.

22. Scheibenbremse nach Anspruch 21, **dadurch gekennzeichnet, dass** der Rampenwinkel nicht konstant ist.

23. Scheibenbremse nach Anspruch 22, **dadurch gekennzeichnet, dass** der Rampenwinkel degressiv verläuft.

24. Scheibenbremse nach Anspruch 23, **dadurch gekennzeichnet, dass** die Rampen zwei Bögen beschreiben, so daß der Bremsbelag bzw. die Bremsbelageinheit der Geometrie des Bremsringes bei seiner Bewegung folgt.

## Claims

1. A disk brake with an electromechanical actuator, which is designed as an electric motor (9), for actuating an application device (4) for applying the brake, which application device (4) has a self-energizing device (8), **characterized in that** the electric motor acts directly, or via a gearing, on a rotary lever (16) which acts on at least one brake piston (19) which moves a brake lining parallel to the brake disk rotational axis, which brake lining is movable both in the direction parallel to the brake disk rotational axis and also parallel to the brake disk friction surface.

2. The disk brake as claimed in claim 1,
**characterized in that** the electric motor drives a linear gearing which acts on the rotary lever (16).

3. The disk brake as claimed in claim 1 or 2,
**characterized in that** a bearing (20) is arranged or formed between the brake lining (3) and the brake piston (19), which bearing (20) permits a movement of the brake lining (3) perpendicular to the application movement of the rotary lever (16), that is to say parallel to the brake disk friction surface.

4. The disk brake as claimed in claim 3,
**characterized in that** the bearing arrangement (20) is embodied as a plain and/or rolling bearing.

5. The disk brake as claimed in claim 3 or 4,
**characterized in that** the brake piston (19) is axially variable in length.

6. The disk brake as claimed in claim 5,
**characterized in that** the brake piston (19) is arranged parallel to at least one or more energizing pistons (21, 22) which, with their one end, are supported directly or via a bearing on the brake caliper and, at their other end, have, at least as a self-energizing device, at least one ramp surface (8) which is inclined with respect to the brake disk friction surface (R).

7. The disk brake as claimed in claim 6,
**characterized in that** the brake piston (19) is arranged between two of the energizing pistons (21, 22).

8. The disk brake as claimed in claim 7,
**characterized in that** the energizing pistons (21, 22) have double-acting ramp surfaces (8) such that said energizing pistons (21, 22) act as ramp surfaces for self-energizing during braking during forward and reverse travel.

9. The disk brake as claimed in claim 8,
**characterized in that** rolling bodies (7) are arranged between the energizing pistons (21, 22) and the brake lining.

10. The disk brake as claimed in claim 9,
**characterized in that** the ramp angle of the recesses in the circumferential direction about the longitudinal axis of the adjusting nuts or brake pistons is not constant but rather variable, such that a ramp angle α of different gradient is present depending on the rotational position of the nuts.

11. The disk brake as claimed in claim 10,
**characterized in that** ball running grooves with different gradient are arranged in the energizing pistons for the different rotational positions.

12. The disk brake as claimed in claim 11,
**characterized in that** the linear gearing (10) is designed as a recirculating ball drive (12).

13. The disk brake as claimed in claim 12,
**characterized in that** the drive nut (13) of the recirculating ball drive (10) is connected to the rotor (14) of the electric motor (9).

14. The disk brake as claimed in claim 13,
**characterized in that** the energizing pistons (21, 22) are axially variable in length.

15. The disk brake as claimed in claim 14,
**characterized in that** the actuating piston (19) and the energizing pistons (21, 22) are composed in each case of a nut (23) and a spindle (24) which is screwed into said nut (23).

16. The disk brake as claimed in claim 15,
**characterized in that** the actuating piston (19) and the energizing pistons (21, 22) are coupled to one another by means of a synchronization device.

17. The disk brake as claimed in one of the preceding claims, **characterized in that** the pressure element (11) of the spindle drive acts on the one end of the rotary lever (16) which is mounted with its other end eccentrically in the brake caliper (1).

18. The disk brake as claimed in one of the preceding claims, **characterized in that** the electric motor is arranged as a unit with the recirculating ball drive (10) on the outer surface of the brake caliper, and extends through the latter with its drive output spindle (11) as a pressure element.

19. The disk brake as claimed in one of the preceding claims, **characterized in that** the application device is designed such that only compressive forces are transmitted to the brake lining (3).

20. The disk brake as claimed in one of the preceding claims, **characterized in that** the application device is designed such that tensile and compressive forces can be transmitted to the brake lining (3).

21. The disk brake as claimed in one of the preceding claims, **characterized in that** the electric motor (9) is connected to a control device for controlling the braking process.

22. The disk brake as claimed in claim 21,
**characterized in that** the ramp angle is not constant.

23. The disk brake as claimed in claim 22,
**characterized in that** the ramp angle runs degressively.

24. The disk brake as claimed in claim 23,
**characterized in that** the ramps describe two arcs, such that the brake lining or the brake lining unit follows the geometry of the brake ring during its movement.

## Revendications

1. Frein à disque à renfort automatique, comprenant un actionneur électromécanique conçu sous forme d'un moteur électrique, à commander un dispositif de serrage de frein (4) à serrer le frein, qui comprend un moyen amplificateur automatique (8), **caractérisé en ce que** ledit moteur électrique agit sur un levier rotatif (16), directement ou via un mécanisme de transmission, lequel levier agit sur au moins un piston du frein (19), qui déplace une garniture de frein en parallèle à l'axe de rotation du disque de frein, laquelle est mobile en une direction non seulement en parallèle audit axe de rotation du disque de frein mais aussi en parallèle à l'aire de friction du disque de frein.

2. Frein à disque selon la revendication 1, **caractérisé en ce que** ledit moteur électrique entraîne un mécanisme de transmission linéaire, qui agit sur ledit levier rotatif (16.

3. Frein à disque selon la revendication 1 ou 2, **caractérisé en ce qu'**un palier (20) est disposé ou formé entre ladite garniture de frein (3) et ledit piston du frein (19), lequel palier permet un mouvement de ladite garniture de frein (3) en un sens orthogonal sur le mouvement d'avancement dudit levier rotatif (16), c.-à-d. en parallèle à ladite aire de friction du disque de frein.

4. Frein à disque selon la revendication 3, **caractérisé en ce que** ledit palier (20) est conçu sous forme d'un palier à glissement et/ou d'un palier à roulement.

5. Frein à disque selon la revendication 3 ou 4, **caractérisé en ce que** la longueur axiale dudit piston du frein (19) est variable.

6. Frein à disque selon la revendication 5, **caractérisé en ce que** ledit piston du frein (19) est disposé en parallèle à au moins un ou plusieurs pistons amplificateurs (21, 22) qui s'appuient par une de ses extrémités directement ou via un palier à l'étrier de frein pendent qu'ils présentent, à leur autre extrémité, au moins une aire de rampe (8) en tant que moyen amplificateur automatique, qui est orientée à une inclinaison relative à ladite aire de friction du disque de frein (R).

7. Frein à disque selon la revendication 6, **caractérisé en ce que** ledit piston du frein (19) est disposé entre deux desdits pistons amplificateurs (21, 22).

8. Frein à disque selon la revendication 7, **caractérisé en ce que** lesdits pistons amplificateurs (21, 22) présentent des aires de rampe (8) à double sens d'une telle manière, qu'ils agissent en tant que des aires de rampe d'amplification automatique au cas des serrages de frein en marche en avant et en marche arrière.

9. Frein à disque selon la revendication 8, **caractérisé en ce que** des corps de roulement (7) sont disposés entre lesdits pistons amplificateurs (21, 22) et ladite garniture de frein.

10. Frein à disque selon la revendication 9, **caractérisé en ce que** l'angle de rampe des creux, en sens périphérique autour de l'axe longitudinal des écrous de rattrapage ou respectivement des pistons du frein, n'est pas constant mais variable de façon, qu'un angle de rampe α à pente différente selon la position rotative desdits écrous soit présent.

11. Frein à disque selon la revendication 10, **caractérisé en ce que** des gorges de roulement des billes à pente différente sont disposées dans lesdits pistons amplificateurs pour des positions rotatives différentes.

12. Frein à disque selon la revendication 11, **caractérisé en ce que** ledit mécanisme de transmission linéaire (10) est conçu sous forme d'un mécanisme d'entraînement à circulation des billes (12).

13. Frein à disque selon la revendication 12, **caractérisé en ce que** l'écrous d'entraînement (13) dudit mécanisme d'entraînement à circulation des billes (10) est relié au rotor (14) dudit moteur électrique (9).

14. Frein à disque selon la revendication 13, **caractérisé en ce que** lesdits pistons amplificateurs (21, 22) présentent une configuration variable en longueur axiale.

15. Frein à disque selon la revendication 14, **caractérisé en ce que** chacun dudit piston de commande (19) et desdits pistons amplificateurs (21, 22) est composé d'un écrou (23) et d'une broche (24) vissée dans l'écrou.

16. Frein à disque selon la revendication 15, **caractérisé en ce que** lesdits pistons de commande (19) et lesdits pistons amplificateurs (21, 22) sont accouplés l'un à l'autre moyennant d'un moyen de synchronisation.

17. Frein à disque selon une quelconque des revendications précédentes, **caractérisé en ce que** l'élément presseur (11) dudit mécanisme d'entraînement à broche agit sur la première extrémité dudit levier rotatif (16) qui est logé, par son autre extrémité, dans ledit étrier de frein (1) en position décentrée.

18. Frein à disque selon une quelconque des revendications précédentes, **caractérisé en ce que** ledit moteur électrique, ensemble avec ledit mécanisme d'entraînement à circulation des billes (10), est disposé en tant qu'un module à la surface extérieure dudit étrier de frein, en passant par le dernier par sa broche de sortie (11) en tant que l'élément presseur.

19. Frein à disque selon une quelconque des revendications précédentes, **caractérisé en ce que** ledit dispositif de serrage du frein est conçu sous une telle forme, que des efforts de pressions seulement soient transmis à ladite garniture de frein (3).

20. Frein à disque selon une quelconque des revendications précédentes, **caractérisé en ce que** ledit dispositif de serrage du frein est conçu sous une telle forme, que la transmission des efforts de traction et de pressions à ladite garniture de frein (3) soit possible.

21. Frein à disque selon une quelconque des revendications précédentes, **caractérisé en ce que** ledit moteur électrique (9) est relié à un dispositif de réglage à régler l'action de serrage de frein.

22. Frein à disque selon la revendication 21, **caractérisé en ce que** l'angle de rampe n'est pas constant.

23. Frein à disque selon la revendication 22, **caractérisé en ce que** l'angle de rampe présente une loi dégressive.

24. Frein à disque selon la revendication 23, **caractérisé en ce que** lesdites rampes décrivent deux arcs d'une telle façon, que ladite garniture de frein ou respectivement le module de garniture de frein suive la géométrie de la jante de freinage au cours de son mouvement.
